# EUROPEAN PATENT SPECIFICATION

(11) **EP 2 826 727 B1**
(45) Date of publication and mention of the grant of the patent: **14.09.2016**
(21) Application number: 13177010.9
(22) Date of filing: 18.07.2013
(51) Int. Cl.: B65G 1/02, B65G 13/11

(54) **System for storing and transporting loaded pallets**
Lager- und Transportsystem für beladene Paletten
Système pour stocker et transporter des palettes chargées

(43) Date of publication of application: 21.01.2015
(73) Proprietor: DF Mompresa, S.A.U., 33206 Gijon (ES)
(72) Inventor: Bausela Sanchez, Fernando, 33203 GIJÓN (ES)
(74) Representative: Naranjo Marcos, Maria Antonia

(56) References cited:
- DE-A1- 2 457 600
- FR-A1- 2 621 019
- US-A- 2 950 014
- US-A- 4 453 641

## Description

### OBJECT OF THE INVENTION

The invention herein relates to a system for storing and transporting loaded pallets, whose obvious purpose is to transport loaded pallets between areas and/or logistics processes, based on a series of motorised roller conveyors mounted on a typical pallet racking structure, the assembly thus comprising motorised (also called dynamic) roller shelving. The conveyors would be configured such that material produced in batches can exit via each of the paths where they can be temporarily stored, while being simultaneously transported.

### BACKGROUND OF THE INVENTION

Currently many manufacturers of low value-added products with a high turnover of stock (juice, milk, water packers/bottlers etc.) and additionally with marked seasonal index, both in production and consumption (fruit harvesting, greater dairy production and water consumption in summer), have solutions that occasionally mean that they cannot make maximum use of the available space, or do not have adequate incoming/outgoing streams and rates.

These types of production lines, due to the product type normally intended for human consumption, must adhere to an exit order based on the order of entry, which in the industry is known as "First In, First Out" (FIFO).

Given these facts, the main problems to be resolved and that are demanded by the market can be summarised as follows:
- Design a system that allows maximum use of the available space.
- Provide a shelving system that does not act as a bottleneck in the facility, which requires a fast and reliable system.
- Due to the seasonality of many of the products, the system must have adequate capacity to act as the "lungs", capable of absorbing production at certain times.

Currently there are two systems on the market that address or try to address the problems and premises previously discussed, one of whose systems is based on dynamic roller shelving, where the load enters at one end and moves towards the other by gravity, due to the inclination of the racks.

Said inclination of the racks implies a loss of storage space, since the effect is not noticeable in shelving that is short in length, but if the length of the shelving is increased for greater capacity, one or more storage levels is lost, which increases the storage capacity by 20% if the system does not include shelving at an angle.

Such a system is in accordance with the preamble of claim 1 and is disclosed in US2,950,014.

An alternative is to use a shuttle carriage that moves the pallets along the shelving, such that the shelving is arranged horizontally, enabling better use of the available space.

A major problem of this second system is that the storage speed is limited, as each line of the shelving does not usually have its own shuttle carriage due to the high cost of each unit, therefore the forklifts that insert and remove the pallets must pick up the carriage from wherever it is, which is obviously a major waste of time.

Another problem with the use of shuttle carriages is that even by having a carriage on each storage channel, the pallets move extremely slowly along the shelving in the direction of the order in which they were inserted, since the shuttle carriage must move them one by one, because every time it moves forward, downtime is added due to returning empty to the previous pallet position.

Therefore, current systems of storage and handling or transporting loaded pallets provide no solution to the need for the facility to act as a "lung", since significant storage capacity is lost in the case of dynamic roller shelving, its purpose being thereby lost, while in the case of shelving with a shuttle carriage the system is too slow.

### DESCRIPTION OF THE INVENTION

The proposed system is designed to solve the aforementioned problems, addressing the main market needs with optimised utilisation of space and greater flexibility, further minimising human error that may occur in the warehouses in which the producer usually manufactures several product lines, or the same product for different brands. The latter has risen sharply in recent years, due to the increased demand for so-called "private labels" and/or "own-brand labels", such that it becomes more important to avoid mixing products intended for different customers in these warehouses.

Specifically, the system of the invention is based on the use of motorised shelving in order to make maximum use of the available space for storing products, not acting as a bottleneck in the production line and acting as a "lung" in the production chain, as this solution can be implemented in warehouses of the desired size, even lastly helping to reduce human error when storing and preparing orders of individual brands or products.

The use of conventional manufacturing shelving based on corrugated sheet metal makes the manufacturing cost of such systems affordable due to its structural simplicity and economy of materials.

In other words, the system of the invention is a novelty worldwide, based on the use of motorised roller shelving for warehouses with FIFO shelving to provide service for multi-product production lines, further avoiding the possibility of human error.

Specifically, the system of the invention is based on using a support structure compatible with the integral pallet transport system, whose support structure is logically complemented with an internal pallet transport system based on and overall providing the appropriate motion to the transport system formed by rollers, all actuated by a geared motor and appropriate frequency converters or any alternative actuation system.

The system makes it possible to transport loaded pallets between zones and/or logistics processes, the transport of which is carried out by the previously mentioned motorised roller conveyors arranged in multiple contiguous rows and at various heights, to achieve better use of the available space in the corresponding bay, although logically other arrangements could be used.

The configuration of the roller conveyors forming adjacent rows enables materials produced in batches to exit via each of the paths where they can be temporarily stored, while they are simultaneously transported to the dispatch area.

Both the entry and exit header of the loaded pallets must be suitably protected against impact, to prevent accidental impact against maintenance equipment, or impact against the carriage components used in the lifting and lowering of certain items such as personnel, frames, etc..

Likewise, a pallet-positioning means has been provided, based on the use of two lateral inclined planes, like a funnel, centred as much as possible in the gap and with the same gradient, serving as a guide for the approach movement of the loaded pallet to the general structure, or to the roller conveyor by means of two bars that progressively close the front area of access to the entry station of the roller conveyor itself.

The loaded pallet is deposited at the end of the first roller conveyor and moves forward in position, leaving a free gap for the next loaded pallet to enter and so on until the first roller conveyor is complete, at which time this will move a number of loaded pallets simultaneously to the next roller conveyor.

In respect of the exit header where the loaded pallets are collected, the operator will be able to remove the pallets one by one with the corresponding forklift, enabling the progressive emptying of the first roller conveyor, which will trigger the complete emptying of the next roller conveyor, once the last load, or the last loaded pallet, has been removed.

In this case, to prevent any impact of the loaded pallet against the lateral elements of the roller frame, two lateral vertical planes are used as a guide, centred as much as possible into the gap.

The system is complemented by an electricity distribution switchboard and power supply, management and control cabinet, with appropriate electrical and safety protections and sensors, master switches, safeguards, frequency converters, photocells indicating the position of the roller conveyors, etc. based on the control and management of a programmable controller.

### DESCRIPTION OF THE DRAWINGS

To complete the description being made below, and for a better understanding of the characteristics of the invention, attached to the present descriptive memory and as an integral part of it, is a set of drawings where, for purposes of illustration and in a non-limiting manner, the following is shown:

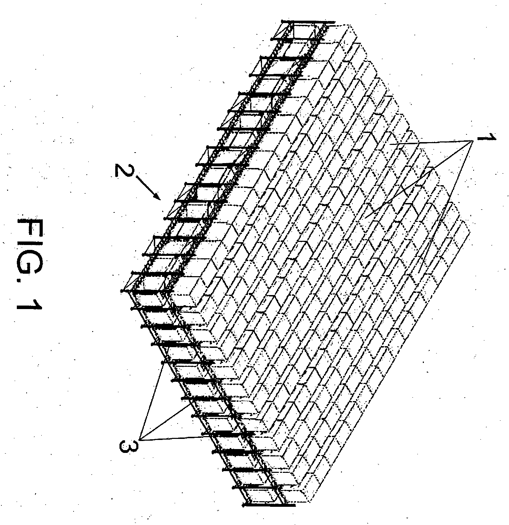

Figure 1.- Shows a representation corresponding to an overview of a system for storing and transporting loaded pallets on two levels.
Figure 2.- Shows a cross-sectional view of the system of the invention in three adjoining bays.
Figure 3.- Shows a plan view of the arrangement of the roller conveyors.
Figure 4.- Shows a detailed section corresponding to the cut line (A-A) of the previous figure.
Figure 5. - Shows a detailed view of the entrance of the loaded pallets according to the system of the invention.
Figure 6. - Shows an enlarged view of the funnel configuration of the entrance of the loaded pallets on the roller conveyor system.
Figure 7. - Shows the loaded pallets exiting.
Figure 8.- Shows an enlarged detailed view of the funnel that forms at the exit of the system of the invention.

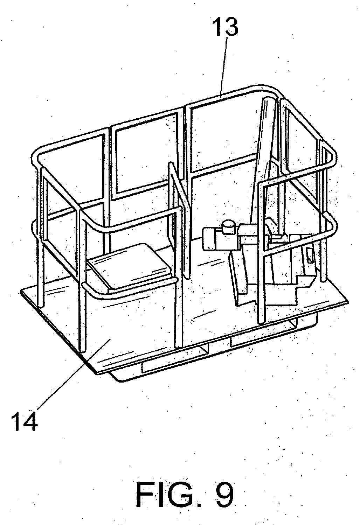

Figure 9.- Finally shows a perspective view of one embodiment of a transport frame for personnel and equipment for carrying out maintenance.

### PREFERRED EMBODIMENT OF THE INVENTION

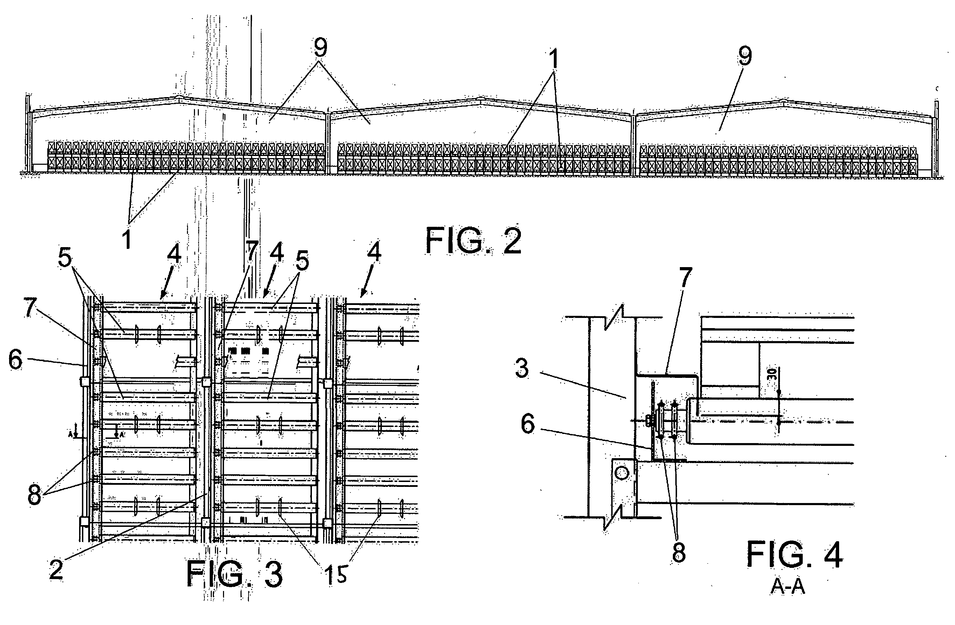

As can be seen in the figures, the system of the invention is a system for storing and transporting loaded pallets (1) on a number of vertical structures (3) with rails, crosspieces and bracing struts, such that on that general structure (2) a number of roller conveyors (4) are provided, forming alignments that in the preferred embodiment and as shown in the figures, has two levels, each roller conveyor (4) formed by a plurality of rollers (5) mounted between rails (6) with protective plates (7) for a pair of pinions (8) provided at one end of the rollers (5), as seen in the detail of figure 4.

In Figure 2, three areas of bays can be seen that are occupied by roller conveyors on two levels, forming alignments along those areas of the bays.

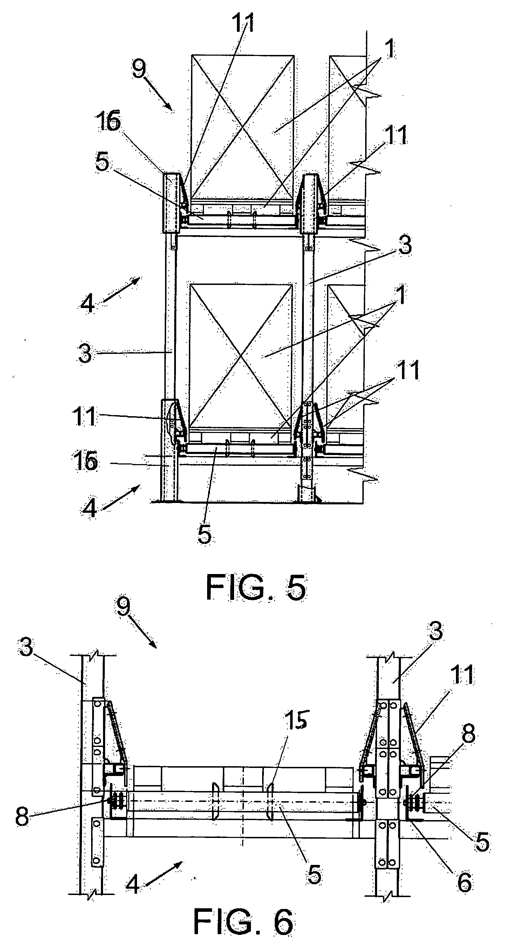

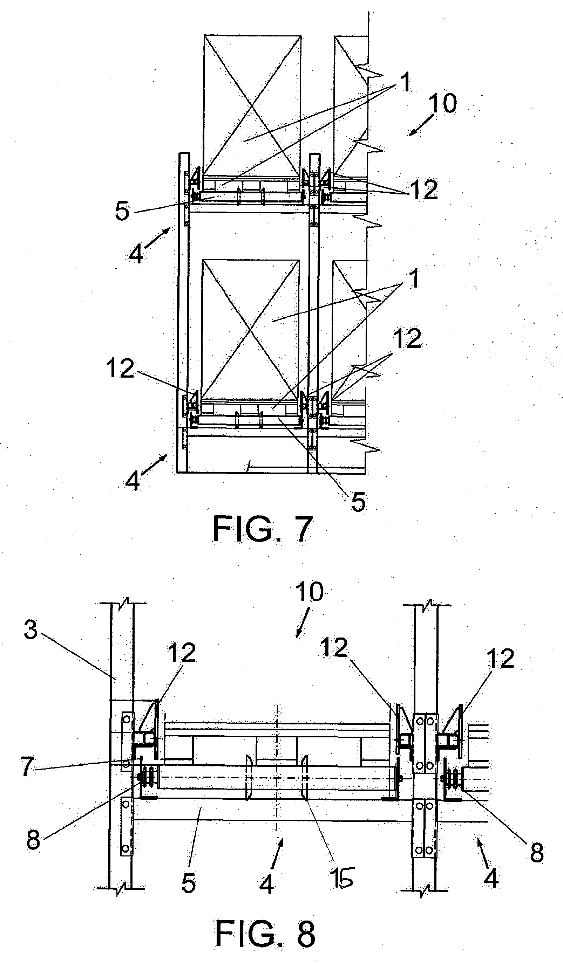

As seen in Figures 5 and 7, both the entry (9) and exit (10) include front and logically rear protective elements to prevent, as far as possible, the impact of the elements on the forklift occupied by personnel or other elements that will be explained below, with the characteristic that the entry header (9) incorporates centring means (16) making it easy to centre the loaded pallets (1), formed by two inclined planes (11) forming a type of funnel, and with the same gradient on both sides, as can be clearly seen in Figure 6, whose funnel or inclined planes (11) forming the above will act as a guide for the approach movement of the loaded pallets (1) on the corresponding roller conveyor (4), using a pair of bars that gradually close the front area of access to the entry station of the roller conveyor (4).

In addition to the front protectors, a number of protectors formed by vertical planes (12) have been provided at the exit (10), as can be seen in the detail of Figure 8, to prevent any impact from the corresponding loaded pallets (1) against the lateral components.

In the whole system there is a frame (13) that acts as a drawer for lifting personnel and components used during maintenance, whose frame (13) includes a base (14) that corresponds with that of the pallets (1), such that said frame can be picked up (13) and handled for lifting, lowering and transporting by a fork-lift through the aisles of the facility. Said frame (13) for personnel, tools and other supplies, in addition to the base (14) that corresponds to that of a pallet (1) for loading, is complemented with a handheld remote control to operate directly on the installation, manually and safely.

### References List:

- 1: pallets
- 2: general structure
- 3: struts
- 4: roller conveyor
- 5: rollers
- 6: lateral supports
- 7: plate
- 8: pinions
- 9: entry header
- 10: exit header
- 11: inclined planes
- 12: vertical planes
- 13: frame
- 14: base
- 15: safeguards
- 16: centring means

## Claims

1. System for storing and transporting loaded pallets, designed for transporting loaded pallets (1) between two areas or logistics processes, enabling the entry and exit of the loaded pallets (1) in the same order, and wherein the corresponding installation consists of roller conveyors in several rows and at several heights having a general structure (2) based on struts (3), rails, crosspieces and bracing struts, all manufactured from corrugated sheet metal, defining alignments in accordance with which roller conveyors are provided (4) , and also including means for centring (16) and guiding the loaded pallets (1) both on entry and exit, **characterized in that** said roller conveyors are formed by appropriate electromechanically driven rollers, of each roller conveyor (4), both the entry header (9) and the exit header (10) of each conveyor roller (4) having safeguards (15) to prevent any impacts of the loaded pallets (1) against the sides all complemented with actuated geared motors for the roller conveyors (4) and electricity distribution switchboards and power supply, management and control cabinets with appropriate electrical and safety protections, including sensors, master switches, safeguards, frequency converters and photocell position indicator of the roller conveyors themselves (4).

2. System for storing and transporting loaded pallets according to claim 1, **characterised in that** the guide means on the entry header (9) of the roller conveyors (4) include a pair of inclined planes (11) establishing a type of funnel for centring and guiding the loaded pallets (1) by means of the roller conveyors (4).

3. System for storing and transporting loaded pallets according to claim 1, **characterised in that** the guide means on the exit header (10) of the roller conveyors (4) are comprised of vertical and lateral planes (12).

4. System for storing and transporting loaded pallets, according to previous claims, **characterised in that** the control and management for the proper operation of the system is based on a programmable controller.

## Patentansprüche

1. System für die Lagerung und den Transport von beladenen Paletten, entwickelt für den Transport von beladenen Paletten (1) zwischen zwei Bereichen oder Logistik-Prozessen, zur Ermöglichung der Ein- und Auslagerung der beladenen Paletten (1) in der gleichen Reihenfolge, wobei die entsprechende Installation aus Rollenbahnen in mehreren Lagen und auf verschiedenen Höhen besteht, mit einer allgemeinen Struktur (2), basierend auf Streben (3), Schienen, Traversen und Verstrebungen, alle aus Wellblech hergestellt, die Ausrichtungen werden entsprechend der Ausrichtung der Rollenbahnen festgelegt (4)(handschriftliche Einfügung, die aus den entsprechenden, elektromechanisch angetriebenen Rollen jeder Rollenbahn (4), dem Eingangskopf (9) und dem Ausgangskopf (10) jeder Förderrolle bestehen (4), die mit Schutzeinrichtungen (15) versehen sind, um
alle Krafteinwirkungen auf (1) beide Palettenseiten (handschriftliche Einfügung abzuwehren, darunter auch Vorrichtungen zur Zentrierung (16) und Führung der beladenen Paletten (1), am Ein- und Ausgang (handschriftliche Einfügung, ergänzt durch betätigte Zahnrad-Motore für die Rollenförderer (4) und Schaltanlagen für die Stromverteilung, Management- und Schaltschränke mit der entsprechenden Stromversorgung und
den entsprechenden Sicherheitsschützen, einschließlich Sensoren, Hauptschaltern, Sicherungen, Frequenzumrichtern und Photozellen-Stellungsanzeige für die Rollenbahnen selbst (4).

2. System für die Lagerung und den Transport von beladenen Paletten nach Anspruch 1, **gekennzeichnet durch** die Führungsvorrichtung auf dem Eingangskopf (9) der Rollenbahnen (4) mit einem Paar von
geneigten Ebenen (11), die eine Art Trichter für die Zentrierung und Führung der beladenen Paletten (1) **durch** die Rollenbahnen (4) bilden.

3. System für die Einlagerung und den Transport von beladenen Paletten nach Anspruch 1, **gekennzeichnet dadurch, dass** die Führungseinrichtung auf dem Ausgangskopf (10) der Rollenbahnen (4) aus
Höhen- und Seitenflächen (12) bestehen.

4. System für die Einlagerung und den Transport von beladenen Paletten nach vorangegangenen Ansprüchen, **gekennzeichnet durch** die Steuerung und Verwaltung des ordnungsgemäßen Betriebs des Systems basierend auf einer programmierbaren Steuerung.

## Revendications

1. Système pour le stockage et le transport des palettes chargées, conçu pour transporter des palettes chargées (1) entre 2 zones ou circuits logistiques, permettant l'entrée et la sortie des palettes chargées (1) dans le même ordre et où l'installation correspondante se compose de transporteurs roulants en plusieurs rangées et à différentes hauteurs, ayant une structure générale (2) basée sur des entretoises (3), des rails, des traverses et des renforts, tous fabriqués à partir de feuilles de métal ondulées, définissant des alignements selon lesquels les transporteurs roulants sont fournis (4), et incluant aussi des moyens pour centrer (16) et guider les palettes chargées (1) autant à l'arrivée qu'à la sortie, caractérisés dans le fait que lesdits transporteurs roulant sont formés par des rouleaux qui fonctionnent de manière électromécanique pour chaque transporteur roulant (4), la tête (9) et la sortie (10) de chaque rouleau transporteur (4) ayant des protections (15) pour éviter tout impact des palettes chargées (1) contre les côtés tous complétés avec des motoréducteurs activés pour le transporteur roulant (4) et des tableaux de distribution électrique et du courant électrique, des armoires de gestion et de contrôle avec des protections électriques et de sécurité appropriées, incluant des capteurs, des interrupteurs principaux, des convertisseurs de fréquence et des indicateurs de position photoélectriques pour les transporteurs roulants eux-mêmes (4).

2. Système pour le stockage et le transport des palettes chargées selon la demande 1, **caractérisé par le fait que** le moyen de guidage sur la tête (9) des transporteurs roulants (4) inclut une paire de plans inclinés (11) établissant une sorte de cheminée pour centrer et guider les palettes chargées (1) au moyen des transporteurs roulants (4).

3. Système pour le stockage et le transport des palettes chargées selon la demande 1, **caractérisé par le fait que** le moyen de guidage sur la sortie (10) des transporteurs roulants (4) est composé de plans latéraux et verticaux (12).

4. Système pour le stockage et le transport des palettes chargées selon les demandes précédentes, **caractérisé par le fait que** le contrôle et la gestion pour le bon fonctionnement du système sont basés sur un contrôleur programmable.
